# EUROPEAN PATENT APPLICATION

(11) **EP 4 837 744 A1**
(43) Date of publication of application: **11.11.2026**
(21) Application number: 26176091.2
(22) Date of filing: 01.05.2026
(51) Int. Cl.: B41J 11/00, B41J 2/21

(54) **DEVICE AND METHOD FOR ADAPTING THE QUANTITY OF FLUID APPLIED TO A RECORDING MEDIUM**

(30) Priority: 09.05.2025 DE 102025117942
(71) Applicant: Canon Production Printing Holding B.V., 5914 HH Venlo (NL)
(72) Inventor: PAUL, Andreas, 5914HH Venlo (NL); SALIGER, Martin, 5914 HH Venlo (NL); MIEDEMA, Mark, 5914 HH Venlo (NL)
(74) Representative: Canon Production Printing IP Department

(57) **Abstract**

A control device (101) for adapting the total quantity of fluid applied to a portion of a recording medium (120). The control device (101) is configured to determine, for the portion of the recording medium (120), a progression of the quantity (302) of ink that is applied to the portion of the recording medium (120) for printing of a print image along a grain direction (201) of fibers of said recording medium (120). The control device (101) is also configured to determine, depending on the progression of the quantity (302) of ink, a progression of the quantity of transparent fluid along the grain direction (201) for the portion of the recording medium (120), and to effect that, in addition to the print image, transparent fluid is applied to the portion of the recording medium (120) according to the determined progression of the quantity of transparent fluid.

## Description

### BACKGROUND OF THE INVENTION

### Field of the Invention

The invention relates to a printing device, in particular an inkjet printing device. The invention relates in particular to the reduction of the deformation, for instance the curling, of a recording medium printed to with ink.

### Description of Related Art

Inkjet printing devices can be used for printing to recording media such as paper, for example. For this purpose, one or more nozzles are used in order to fire ink droplets at the recording medium, and thus to generate a desired print image on the recording medium. An inkjet printing device typically comprises a drying unit in order to dry the recording medium after application of the print image, and in order to thereby fix the applied ink on the recording medium.

Printing to a recording medium with ink, in particular with aqueous ink, can lead to the situation that the recording medium deforms, in particular curls, in printed partial regions and/or in the surroundings of printed partial regions.

### SUMMARY OF THE INVENTION

The present document deals with the technical object of efficiently and reliably reducing the deformation of a recording medium that is effected upon printing to said recording medium. The object is respectively achieved via the features described herein.

According to one aspect, a device is described for adapting the total quantity of fluid that is applied to a portion of a recording medium. The device is configured to determine, for the portion of the recording medium, the progression of the quantity of ink that is applied to the portion of the recording medium along the grain direction of fibers of the recording medium for printing of a print image by an inkjet printing device.

Furthermore, the device is configured to determine, depending on the progression of the quantity of ink, a progression of the quantity of transparent fluid (for example water) along the grain direction for the portion of the recording medium, so that a progression of a total quantity of applied fluid along the grain direction results for the portion of the recording medium by superimposing the progression of the quantity of ink and the progression of the quantity of transparent fluid. The progression of the quantity of transparent fluid can be determined such that the progression of the total quantity of fluid applied in total along the grain direction exhibits a gradient that is numerically smaller, at least in a sub-portion of the portion of the recording medium, than the gradient of the progression of the quantity of ink in the sub-portion. The fibers in the paper are not in parallel; rather, a mixture of directions is present that also, in part, include curved fibers. However, there is a predominant orientation that may lead to ripple-like deformations. Given rolled materials, the predominant orientation is typically in the transport direction.

The device may also be configured to effect that, transparent fluid, in particular water, is applied, in particular printed, onto the portion of the recording medium in addition to the print image, according to the determined progression of the quantity of transparent fluid.

According to a further aspect, a method is described for adaptation of the total quantity of fluid applied to a portion of a recording medium. The method comprises determining, for the portion of the recording medium, a progression of the quantity of ink that is applied to the portion of the recording medium along the grain direction of fibers of the recording medium for printing of a print image by an inkjet printing device. Furthermore, the method comprises determining, depending on the progression of the quantity of ink, a progression of the quantity of transparent fluid along the grain direction for the portion of the recording medium, so that a progression of a total quantity of fluid applied in total along the grain direction results for the portion of the recording medium by superimposing the progression of the quantity of ink and the progression of the quantity of transparent fluid. The method can also comprise effecting that, in addition to the print image, transparent fluid is applied onto the portion of the recording medium according to the determined progression of the quantity of transparent fluid.

Furthermore, in this document an inkjet printing device is described that comprises the device described in this document.

### BRIEF DESCRIPTION OF THE DRAWINGS

In the following, exemplary embodiments of the invention are described in detail using the schematic drawings. Thereby shown are:
- Fig. 1: a block diagram of an example of an inkjet printing device;
- Fig. 2: an example of a recording medium with individual fibers;
- Fig. 3a: an example of an inked partial region and a wetting region of a print image, in side view;
- Fig. 3b: an example of an inked partial region and a wetting region of a print image, in plan view; and
- Fig. 4: a workflow diagram of an example of a method for reducing the deformation of a recording medium to which has been printed.

The non-limiting embodiments of the present invention will be described with reference to the accompanying drawings. Elements, features and components that are identical, functionally identical and have the same effect are, insofar as is not stated otherwise, respectively provided with the same reference character.

### DESCRIPTION OF THE INVENTION

In the following description, numerous specific details are set forth in order to provide a thorough understanding of the embodiments of the present invention. However, it will be apparent to those skilled in the art that the embodiments, including structures, systems, and methods, may be practiced without these specific details. Well-known methods, procedures, components, and circuitry have not been described in detail to avoid unnecessarily obscuring embodiments of the invention. The connections shown in the figures between functional units or other elements can also be implemented as indirect connections, wherein a connection can be wireless or wired. Functional units can be implemented as hardware, software or a combination of hardware and software.

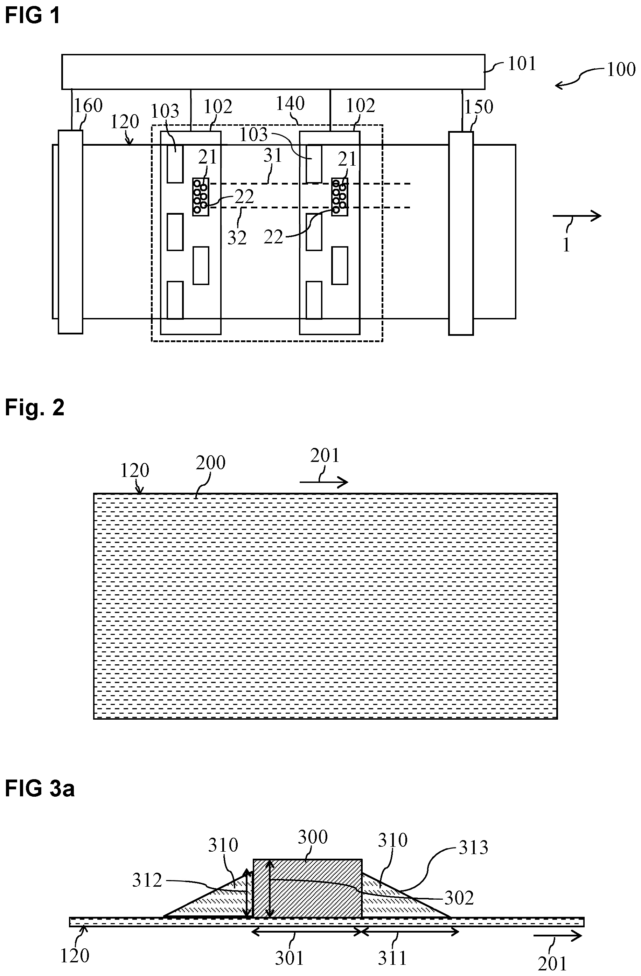

The printing device 100 depicted in Fig. 1 is designed for printing to a recording medium 120 in the form of a sheet or page or plate or belt. The recording medium 120 can be taken off a roll. The recording medium 120 can have a length along the transport direction 1 that is significantly greater, for example by a factor of 10 or more, in particular 100 or more, than the width of the recording medium 120. The recording medium 120 can be produced from paper, paperboard, cardboard, metal, plastic, textiles, a combination thereof, and/or other materials that are suitable and can be printed to. The recording medium 120 is guided through the printing unit 140 of the printing device 100 along the transport direction 1, represented by an arrow.

In the depicted example, the printing unit 140of the printing device 100 comprises two print bars 102, wherein each print bar 102 can be used for printing with ink of a defined color, for example black, cyan, magenta, and/or yellow, and MICR ink if applicable. Different print bars 102 can be used for printing with respective different inks. Furthermore, the printing device 100 can comprise at least one fixing or drying unit that is configured to fix a print image printed onto the recording medium 120.

A print bar 102 can comprise one or more print heads 103 that are possibly arranged side by side in a plurality of rows in order to print the dots of different columns 31, 32 of a print image onto the recording medium 120. **In** the example presented in Fig. 1, a print bar 102 comprises five print heads 103, wherein each print head 103 prints the dots of a group of columns 31, 32 of a print image onto the recording medium 120.

In the embodiment depicted in Fig. 1, each print head 103 of the printing unit 140comprises a plurality of nozzles 21, 22, wherein each nozzle 21, 22 is configured to fire or eject ink droplets onto the recording medium 120. For example, a print head 103 of the printing unit 140 can comprise multiple thousands of effectively utilized nozzles 21, 22 that are arranged along multiple rows transverse to the transport direction 1 of the recording medium 120, i.e. along the print width. Dots of a line of a print image can be printed onto the recording medium 120 transverse to the transport direction 1, i.e. along the width of the recording medium 120, by means of the nozzles 21, 22 of a print head 103 of the printing unit 140.

The printing device 100 also comprises a control device 101, for example a driving hardware and/or a controller, that is configured to drive the actuators of the individual nozzles 21, 22 of the individual print heads 103 of the printing unit 140in order to apply the print image onto the recording medium 120 depending on print data. In an exemplary embodiment, the control device 101 may include processing circuitry or at least one processor that is configured to perform one or more functions and/or operations of the control device 101, including activating the actuators of the individual nozzles 21, 22 of the individual print heads 103 of the printing unit 140 to apply the print image onto the recording medium 120 based on print data, processing print and/or other data, control one or more modes of the printing device 100 and/or controlling one or more operations of the printing device 100. In an exemplary embodiment, the control device 101 includes one or more interfaces (e.g. a wired and/or wireless input and/or output interface, transceiver, or the like) that are configured to receive or output data or information. For example, the control device 101 may receive signals generated by one or more components of the printing device 100 (e.g. from a user interface of the printing device 100) and/or output control signals to one or more components of the printing device 100. In an exemplary embodiment, the control device 101 may include a memory configured to store data/information, and/or store executable code that is executable by the processing circuitry to cause the processing circuitry or at least one processor to perform the operation(s) of the control device 101. For each nozzle 21, 22, i.e. for each column 31, 32 of the print image, and for each line of the print image, i.e. for every single dot of the print image, the print data can respectively indicate whether an ink ejection should take place or not, and if applicable what ink quantity should be ejected.

The printing unit 140of the printing device 100 thus comprises at least one print bar 102 having K nozzles 21, 22 that can be driven with a defined line timing in order to print a line with K pixels or K columns 31, 32 of a print image into the recording medium 120, for example with K > 1000, said line running transverse to the transport direction 1 of said recording medium 120. In the shown example, the nozzles 21, 22 are installed immobile or fixed in the printing device 100, and the recording medium 120 is directed past the stationary nozzles 21, 22 with a defined transport velocity. In this exemplary embodiment, the print heads are installed so as to be fixed. As an alternative to or in combination with this, the print heads may move transversely across the recording medium in order to place the print dots. After one or more passes, the recording medium is then displaced orthogonally in order to print the next "head width."

The printing device 100 may comprise a wetting unit 160 that is configured to apply a transparent fluid, for example water, onto partial regions of the recording medium 120. The wetting unit 160 can have a print bar 102 with one or more print heads 103, wherein the print bar 102 is designed to apply transparent dots onto the recording medium 120 with the transparent fluid. The wetting unit 160 can be arranged before or after the printing unit 140, relative to the transport direction 1, or possibly within the printing unit 140.

Furthermore, the printing device 100 may comprise at least one drying unit 150 that is configured to fix a print image printed onto the recording medium 120 using the printing unit 140 and/or the wetting unit 160.

As presented above, the printing to a recording medium 120 with ink may lead to a deformation, in particular to a curling, of the printed recording medium 120. In particular, printing with water-based ink may lead to partial regions with increased moisture on the recording medium 120. The moisture relates to water and/or other fluids (for example glycerol) that are typical components of inks. It is known that glycerol also has quite strong swelling effects, but on a wholly different time scale. The deformations of the recording medium only appear after hours, possibly even days.

The quantity of moisture can be different in different partial regions. The moisture gradient that results from this can lead to an inhomogeneous expansion of the recording medium 120, in particular of the paper, which can be referred to as hydroexpansion. The inhomogeneous expansion can lead to internal stresses and/or deformations of the surface of the recording medium 120. Wet fibers in the recording medium 120 typically have a reduced stiffness and a limited elasticity, so that these fibers can be plastically deformed in order to satisfy geometric boundary conditions that are determined by the surrounding dry fibers of the recording medium 120. During the fixing of a print image, the moisture content in total is reduced, wherein relatively strong local fluctuations of the moisture content may continue to persist. In the fixing, plastic deformations of the fibers may also be fixed, which may lead to remaining deformations of the recording medium 120 after compensation for the fluid content.

Fig. 2 shows an example of a recording medium 120, in particular a paper-based recording medium 120, that has a plurality of individual fibers 200, in particular paper fibers. Due to the manufacturing process of the recording medium 120, the individual fibers 200 typically have a preferred direction that, in this document, is referred to as the grain direction 201. Given a recording medium 120 in the form of a web, the grain direction 201 typically corresponds to the transport direction 1 of the recording medium 120 in the form of a web. The expansion of a paper-based recording medium 120 transverse to the grain direction 201 is typically significantly greater than in the grain direction 201, since the individual fibers 200 swell up significantly more, for example by a factor of 20, transverse to the grain direction 201 than in the grain direction 201.

To reduce the deformation of a recording medium 120 upon printing to the recording medium 120 with ink, one or more measures can be taken that are intended to apply an optimally uniform quantity of fluid to the recording medium 120 across the entire surface of said recording medium 120, and/or to effect a gradient of the fluid quantity that is optimally numerically small across the entire surface of the recording medium 120. The one or more measures can thus be intended to reduce the magnitude of the fluid gradient along the surface of the recording medium 120, in particular so that it approaches zero. This can be effected in that a transparent fluid, in particular a transparent ink or water, is applied onto the recording medium 120 using the wetting unit 160. The transparent fluid can thereby be applied to the recording medium 120 depending on the print image to be printed, in particular so as to be complementary to the print image to be printed, in order to reduce the fluid gradient along the surface of the recording medium 120.

As presented above, the extent of the expansion of the individual fibers 200 of a recording medium 120 is significantly dependent on the grain direction 201, in particular the mean grain direction, of the individual fibers 200. The expansion of the individual fibers 200 takes place essentially only transverse to the grain direction 201. To reduce the deformation of the recording medium 120, it is therefore typically sufficient if the fluid gradient is reduced, in particular is minimized, by applying transparent fluid only along the grain direction 201. On the other hand, the reduction of the fluid gradient transverse to the grain direction 201 can be omitted in part or entirely. In particular, applying transparent fluid to the recording medium 120 in order to reduce, in particular to minimize, the fluid gradient transverse to the grain direction 201 can be omitted entirely or in part.

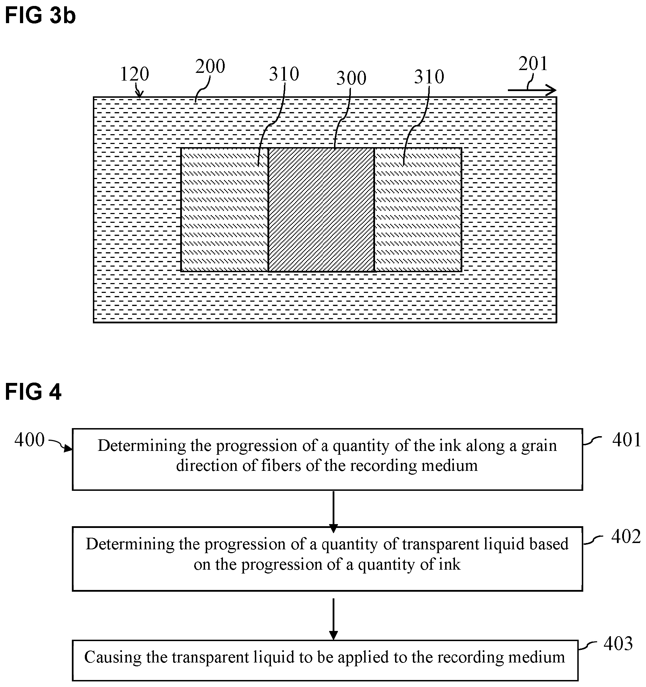

An example of an inked partial region 300 of a print image printed onto a recording medium 120 is depicted in Figures 3a and 3b. The inked partial region 300 has a defined length 301 along the grain direction 201. Furthermore, the inked partial region 300 has a defined (if applicable mean and/or average) fluid quantity 302, which is visualized by the height of the inked partial region 300 in Fig. 3b. The fluid, in particular ink, applied to the inked partial region 300 leads to the individual fibers 200 of the recording medium 120 swelling up transverse to the grain direction 201. On the other hand, essentially no expansion of the individual fibers 200 takes place along the grain direction 201. In the partial regions of the recording medium 120 that are arranged directly before or directly after (relative to the grain direction 201) the inked partial region 300, and to which no fluid, in particular no ink, is applied, the individual fibers 200 remain dry and do not swell up. As a result of this, a relatively strong deformation of the recording medium 120 may occur at the transition between these partial regions and the inked partial region 300.

To reduce the deformation, it can be effected that transparent fluid is applied selectively to the partial region 310 arranged before (relative to the grain direction 201) the inked partial region 300, and/or to the partial region 310 arranged after (relative to the grain direction 201) the inked partial region 300, in order to reduce the fluid gradient along the grain direction 201. A partial region 310 to which transparent fluid is applied can be referred to as a wetting region.

The quantity of transparent fluid applied to a wetting region 310 can vary along the grain direction 201, in particular in order to effect a continuous transition of the fluid quantity between the inked partial region 300 and a partial region of the recording medium 120 to which no fluid has been applied. In the example depicted in Fig. 3a, the quantity of transparent fluid applied in the wetting region 310 is continuously reduced with increasing distance from the inked partial region 300, starting from said inked partial region 300. For example, a maximum quantity 312 of transparent fluid can be applied directly at the transition to the inked partial region 300, which maximum quantity 312 can then be reduced continuously with increasing distance, for example according to a predefined progression 313, for instance a linear progression 313. The wetting region 310 then extends up to a maximum distance 311 from the inked partial region 300 along the grain direction 201. An abrupt fluid gradient along the grain direction 201 at the edges of the inked partial region 300 can thus be avoided.

One or more parameters 311, 312, 313 of a wetting region 310 can depend on one or more properties 301, 302 of the directly adjoining inked partial region 300. Examples of properties 301, 302 of the inked partial region 300 are
- the quantity 302 of ink that was or is applied to the inked partial region 300; and/or
- the length 301 of the inked partial region 300 along the grain direction 201; and/or
- a degree of coverage of the area of the inked partial region 300.

Examples of parameters 311, 312, 313 of a wetting region 310 are
- the maximum quantity 312 of fluid that is applied, in particular directly at the transition to or at the edge of the adjoining inked partial region 300;
- the length 311 of the wetting region 310 along the grain direction 201; and/or
- the progression 313 of the moisture quantity as a function of the distance from the transition to or, respectively, from the edge of the adjoining inked partial region 300.

The following formula describes, by way of example, the quantity of fluid L that is applied in a wetting region 310 as a function of the distance d from the edge of the inked partial region 300, wherein the distance d is measured along the grain direction 201. $L \left(d\right) = \frac{\left({x}_{max}-d\right)}{{x}_{max}} ∗ {L}_{max}$

*Lₘₐ* is the maximum quantity 312 of fluid in the wetting region 310, and *xₘₐ* is the total length 311 of the wetting region 310 along the grain direction 201. A linear progression 313 of the moisture quantity in the wetting region 310 is described by *L(d).*

As is clear from Fig. 3b, the reduction of the gradient of the quantity of moisture is preferably limited to the grain direction 201. It is preferred that no reduction of the moisture gradient takes place transverse to the grain direction 201, so that preferably no wetting regions 310 are arranged at the longitudinal edges of an inked partial region 300 that travel along the grain direction 201.

Additional fluid, in particular transparent fluid, is thus preferably applied - in addition to the printed regions 300 - only in the grain direction 201 and not transverse to the grain direction 201. The applied quantity of fluid can thereby exhibit a defined gradient and/or progression 313 as a function of the distance along the grain direction 201 from a printed region 300. The maximum quantity 312 of additional fluid that is applied at the edge of the printed region 300 can depend on the local coverage, in particular on the degree of coverage, of the printed region 300. It is preferred that no additional fluid is applied if the degree of coverage of the printed region 300 is less than or equal to a defined threshold. The quantity of fluid that is applied in a wetting region 310 can depend on one or more properties of the recording medium 120, which is in particular a paper-based recording medium 120. In particular, the total length 311 of a wetting region 310 can depend on one or more properties of the recording medium 120 such as, for example, the rigidity and/or the swelling behavior. The progression 313 of the fluid quantity applied to a wetting region 310 can depend on one or more properties of the recording medium 120, on one or more properties of the fixing unit 150, and/or on one or more properties of the ink that has been applied to a printed region 300.

The quantity of ink and/or the degree of coverage of a print image typically varies along the grain direction 201. If applicable, every individual line or a group of lines of a print image, wherein the individual lines can travel transverse to the grain direction 201, are considered as a printed and/or inked partial region 300. A respective wetting region 310 can then be arranged along the grain direction 201, adjoining the individual partial regions 300. As a result of this, wetting regions 310 and inked regions 300 can overlap.

For example, it can be detected that the quantity of ink and/or the degree of coverage of a print image varies along the grain direction 201 so that a numerically relatively large fluid quantity gradient results along the grain direction 201. Transparent fluid can then be applied onto an inked region 300 in order to selectively reduce the fluid quantity gradient along the grain direction 201, in particular independently of the fluid quantity gradient transverse to the grain direction 201.

The quantity of transparent fluid that is applied in a wetting region 310, in particular the maximum quantity 312 at an edge of an inked partial region 300, can depend on one or more additional adjacent inked partial regions 300.

It is noted that the measures described in this document are also applicable to a duplex printing, i.e. to a double-sided printing, of a recording medium 120.

Fig. 4 shows a workflow diagram of a, possibly computer-implemented, method 400 for adapting the total quantity of fluid applied to a portion of a recording medium 120. The total quantity of fluid can be adapted with the goal of reducing the deformation of the portion of the recording medium 120. The method 400 can be executed by the control device 101 of an inkjet printing device 100. The printing device 100 can be configured to print a print image onto the recording medium 120 using ink, in particular water-based ink. The recording medium 120 can have a plurality of fibers 200 that exhibit a defined, possibly mean, grain direction 201 due to the manufacturing process of the recording medium 120. The grain direction 201 can run parallel to the individual columns of the print image. In an alternative example, the grain direction 201 can run orthogonal and/or transverse to the individual columns and/or parallel to the individual rows of the print image. The grain direction 201 can have been determined in advance.

The method 400 comprises determining 401, for the portion of the recording medium 120, the progression of the quantity 302 of ink that is applied by the inkjet printing device 100 to said portion of the recording medium 120 to print a print image along the grain direction 201 of fibers 200 of the recording medium 120. The progression of the quantity 302 of ink can be determined on the basis of the print data for the print image to be printed. The progression of the quantity 302 of ink can indicate the respective value of the quantity 302 of ink for a sequence of dots along the grain direction 201.

The method 400 also comprises determining 402, depending on the progression of the quantity 302 of ink, a progression of the quantity of transparent fluid along the grain direction 201 for the portion of the recording medium 120, so that a progression of a total quantity of fluid applied in total along the grain direction 201 results for the portion of the recording medium 120 by superimposing the progression of the quantity 302 of ink and the progression of the quantity of transparent fluid. The progression of the quantity of transparent fluid can indicate a respective value of the quantity of transparent fluid for the individual dots of the sequence of dots along the grain direction 201. Accordingly, the progression of the total quantity of fluid can indicate a respective value of the total quantity of fluid for the individual dots of the sequence of dots along the grain direction 201. The value of the total quantity of fluid for a dot can depend on the sum of the value of the quantity of ink and the value of the quantity of transparent fluid for this dot, or correspond to the sum.

The progression of the quantity of transparent fluid can be determined such that the progression of the total quantity of fluid along the grain direction 201 exhibits a gradient that, at least in a sub-portion of the portion of the recording medium 120, is numerically smaller than the gradient of the progression of the quantity 302 of ink in the sub-portion. The progression of the quantity of transparent fluid can thus be determined in order to have the effect that the progression of the total quantity of fluid that is applied to the recording medium has a numerically reduced gradient along the grain direction 201, for example per portion and/or on average. A relatively uniform progression of the total quantity of fluid can thus be effected along the grain direction 201. The progression of the total quantity of fluid along the transverse direction, i.e. transverse and/or orthogonal to the grain direction 201, can thereby remain unconsidered. The deformation of the recording medium 120 can thus be reliably reduced, and thereby only a relatively small quantity of transparent fluid may be applied to the recording medium 120. However, the information transverse to the grain direction can definitely be relevant to the determination of the fluid quantity in the longitudinal direction: a narrow measurement line in the longitudinal direction requires no measures to be taken, whereas countermeasures must be taken given a wide bar in the longitudinal direction.

The method 400 may also comprise effecting 403 that, in addition to the print image, transparent fluid is applied to the portion of the recording medium 120 according to the determined progression of the quantity of transparent fluid. The determined quantities of transparent fluid for the individual dots can be applied, in particular printed, onto the recording medium 120 using a print bar 102. Print data for the driving of the print bar 102 can be determined on the basis of the determined quantities of transparent fluid.

A device 101 for adapting the total quantity of fluid applied to a portion of a recording medium 120 is thus described in this document. The device 101 can be part of an inkjet printing device 100 that is configured to print a print image onto the recording medium 120. The print image can have a matrix of dots that are arranged in a plurality of columns and in a plurality of rows. The recording medium 120 can have fibers 200 that, due to a manufacturing process, exhibit a defined preferred and/or mean grain direction 201. The grain direction 201 can correspond to the column direction or the row direction.

The device 101 can be configured to determine the grain direction 201 of fibers 200 of the recording medium 120, in particular to read this from a storage unit of the inkjet printing device 100 and/or to receive this via a user interface of the inkjet printing device 100.

The device 101 is configured to determine, for the portion of the recording medium 120, a progression of the quantity 302 of ink that is applied by the inkjet printing device 100 along the grain direction 201 of fibers 200 of the recording medium 120 onto said portion of the recording medium 120 to print the print image. The portion of the recording medium 120 can comprise a sequence of dots of the print image along the grain direction 201, and the progression of the quantity 302 of ink can specify and/or comprise a sequence of quantity values for the corresponding sequence of dots.

The device 101 is also configured to determine, depending on the progression of the quantity 302 of ink, a progression of the quantity of transparent fluid along the grain direction 201 for the portion of the recording medium 120 so that, for the portion of the recording medium 120, a progression of a total quantity of fluid along the grain direction 201 results by superimposing the progression of the quantity 302 of ink and the progression of the quantity of transparent fluid. The progression of the quantity of transparent fluid can specify and/or comprise a sequence of quantity values for the corresponding sequence of dots. The progression of the total quantity of transparent fluid can also specify and/or comprise a sequence of quantity values for the corresponding sequence of dots.

The progression of the quantity of transparent fluid can be determined such that the progression of the total quantity of fluid exhibits a gradient along the grain direction 201 that, at least in a sub-portion of the portion of the recording medium 120, is numerically smaller than the gradient of the progression of the quantity 302 of ink in the sub-portion.

Alternatively or additionally, the device 101 can be configured to determine the progression of the quantity of transparent fluid such that
- the gradient of the progression of the total quantity of fluid, in particular water and/or glycerol, along the grain direction 201 is numerically smaller, in particular is smaller by at least 10%, on average for the portion of the recording medium 120 than the gradient of progression of the quantity 302 of ink in the sub-portion; and/or
- the maximum value of the gradient of the progression of the total quantity of fluid along the grain direction 201 is numerically smaller, in particular is smaller by at least 10%, in the portion of the recording medium 120 than the maximum value of the gradient of the progression of the quantity 302 of ink in the sub-portion.

The gradient of the progression of the quantity 302 of ink can depend on the difference of the quantity values of two directly successive dots of the sequence of dots. The gradient of the progression of the total quantity of fluid can accordingly depend on the difference of the quantity values of two directly successive dots of the sequence of dots. As an alternative to or in combination with this, the resolution (<= 300 dpi) upon application of the additional fluid can be chosen to be markedly lower than that in the print image (>= 600 dpi).

A respective value for the quantity of transparent fluid can thus be determined for individual dots of the print image. The values for the quantity of transparent fluid can thereby be determined such that the gradient of the quantity of fluid that is applied in total to the recording medium 120 along the grain direction 201 is reduced. This can be effected for one or more columns, in particular for all columns, of the print image if the grain direction 201 corresponds to the column direction. On the other hand, this can be effected for one or more rows, in particular for all rows, of the print image if the grain direction 201 corresponds to the row direction.

On the other hand, in the determination of the quantity of transparent fluid that is applied in the portion of the recording medium 120, the device 101 is preferably configured to not take into account the progression of the quantity of ink that, for printing of the print image by the inkjet printing device 100, is applied to the portion of the recording medium 120 transverse - in particular orthogonal - to the grain direction 201 of fibers 200 of said recording medium 120. Alternatively or additionally, the device 101 can be configured to determine the quantity of transparent fluid that is applied in the portion of the recording medium 120 independently of the progression of the quantity of ink that is applied by the inkjet printing device 100 to the portion of the recording medium 120 to print the print image, said quantity of ink being applied transverse - in particular orthogonal - to the grain direction 201 of fibers 200 of the recording medium 120.

The values of the quantity of transparent fluid for the individual dots of the print image are thus preferably determined independently of the quantity gradients of the total quantity of fluid transverse to the grain direction 201. A reliable reduction of the deformation of the recording medium 120 can thus also be produced with a relatively small total quantity of applied fluid.

The device 101 can also be configured to effect that, in addition to the print image, transparent fluid is applied to the portion of the recording medium 120 according to the determined progression of the quantity of transparent fluid. It can in particular be effected that the transparent fluid is applied to the recording medium 120 by a print bar 102 of the inkjet printing device 100, wherein the print bar 102 has the one or more print heads 103 for printing dots.

The device 101 can be configured to identify, on the basis of the progression of the quantity 302 of ink, an edge - in particular a transverse edge - between a first dot and a second dot of the print image, at which edge the value of the quantity of ink of the second dot exceeds the value of the quantity of ink of the first dot by at least a predefined difference value. A transverse edge can thus be determined that travels transverse to the grain direction 201, at which a significant increase in the ink quantity occurs. The ink quantity of the first dot can be zero, for example. The value of the quantity of transparent fluid for the first dot can be determined on the basis of the value of the quantity of ink of the second dot, in particular such that the sum of the values of the quantity of ink and the quantity of transparent fluid of the first dot deviates less strongly from the sum of the values of the quantity of ink and the quantity of transparent fluid of the second dot than the value of the quantity of ink of the first dot deviates from the value of the quantity of ink of the second dot. The reference length is thereby not entirely insignificant. A correction or compensation is not necessary for an individual full-surface dot in unprinted surroundings, since then no disruption occurs.

The device 101 can also be configured to determine, for a sequence of dots starting from the first dot, a corresponding sequence of values of the quantity of transparent fluid, so that the values decrease with increasing distance from the edge. The length 311 of the sequence of dots for which a value greater than zero is determined, and/or the progression 313 of the sequence of values, can thereby depend on one or more properties of the recording medium 120, of the fixing unit 150 for fixing the print image, and/or of the ink of the print image. A continuous reduction of the additionally applied quantity of transparent fluid can thus be effected along the grain direction 201. An especially fluid-efficient reduction of the deformation of the recording medium 120 can thus be effected.

As has already been presented, the gradient of the progression of the fluid quantity transverse to the grain direction 201 is preferably not taken into account in determining the quantity of transparent fluid. For example, the device 101 can be configured to identify, in the portion of the recording medium 120, a printed partial region 300 in which ink is applied to print the print image onto said recording medium 120. The printed partial region 300 can have a transverse edge relative to an unprinted first partial region in which no ink has been applied to the recording medium 120, and which is arranged directly before or after the printed partial region 300 with respect to the grain direction 201. Furthermore, with respect to an unprinted partial region, the printed partial region 300 may have a longitudinal edge that is arranged directly before or after the printed second partial region 300 along the transverse direction that travels transverse to the grain direction 201.

The device 101 can be configured to effect that transparent fluid is applied in the first partial region in order to reduce the gradient of the progression of the total quantity of fluid along the grain direction 201. Furthermore, the device 101 can be configured to effect that no transparent fluid is applied in the second partial region. The deformation of the recording medium 120 can thus be reliably and efficiently reduced given use of an optimally small quantity of transparent fluid.

Embodiments may be implemented in hardware (e.g., circuits), firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computer). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact results from computing devices, processors, controllers, or other devices executing the firmware, software, routines, instructions, etc. Further, any of the implementation variations may be carried out by a general-purpose computer.

For the purposes of this discussion, the term "processing circuitry" shall be understood to be circuit(s) or processor(s), or a combination thereof. A circuit includes an analog circuit, a digital circuit, data processing circuit, other structural electronic hardware, or a combination thereof. A processor includes a microprocessor, a digital signal processor (DSP), central processor (CPU), application-specific instruction set processor (ASIP), graphics and/or image processor, multi-core processor, or other hardware processor. The processor may be "hard-coded" with instructions to perform corresponding function(s) according to aspects described herein. Alternatively, the processor may access an internal and/or external memory to retrieve instructions stored in the memory, which when executed by the processor, perform the corresponding function(s) associated with the processor, and/or one or more functions and/or operations related to the operation of a component having the processor included therein.

In one or more of the exemplary embodiments described herein, the memory is any well-known volatile and/or non-volatile memory, including, for example, read-only memory (ROM), random access memory (RAM), flash memory, a magnetic storage media, an optical disc, erasable programmable read only memory (EPROM), and programmable read only memory (PROM). The memory can be non-removable, removable, or a combination of both.

### REFERENCE LIST

- 1: transport direction
- 21, 22: nozzle (print image)
- 31, 32: column (of the print image)
- 100: printing device
- 101: control device
- 102: print bar
- 103: print head
- 120: recording medium
- 140: printing unit
- 150: fixing or drying unit
- 160: wetting unit
- 200: individual fiber
- 201: grain direction
- 300: inked region
- 301: length
- 302: quantity of ink
- 310: wetting region
- 311: length
- 312: maximum quantity
- 313: progression
- 400: method to reduce the deformation of a recording medium
- 401-403: method steps

## Claims

1. A control device (101) for adapting the total quantity of fluid applied to a portion of a recording medium (120), the control device (101) configured to:
- determine, for the portion of the recording medium, a progression of a quantity (302) of ink that is applied to the portion of the recording medium (120) for printing of a print image by an inkjet printing device (100) along a grain direction (201) of fibers of said recording medium (120);
- determine, depending on the progression of the quantity (302) of ink, a progression of a quantity of transparent fluid along the grain direction (201) for the portion of the recording medium (120) so that a progression of a total quantity of fluid along the grain direction (201) results for the portion of the recording medium (120) by superimposing the progression of the quantity (302) of ink and the progression of the quantity of transparent fluid; wherein the progression of the quantity of transparent fluid is determined such that the progression of the total quantity of fluid exhibits a gradient along the grain direction (201), which gradient is numerically smaller, at least in a sub-portion of the portion of the recording medium (120), than the gradient of the progression of the quantity (302) of ink in the sub-portion; and
- effect that, in addition to the print image, transparent fluid is applied to the portion of the recording medium (120) according to the determined progression of the quantity of transparent fluid.

2. The control device (101) according to claim 1, wherein the control device (101) is further configured to determine the grain direction (201) of fibers (200) of the recording medium (120), in particular to read this out from a storage unit of the inkjet printing device (100) and/or to receive this via a user interface of the inkjet printing device (100).

3. The control device (101) according to claim 1 or 2, wherein
- the portion of the recording medium (120) along the grain direction (201) comprises a sequence of dots of the print image;
- the progression of the quantity (302) of ink specifies and/or comprises a sequence of quantity values for the corresponding sequence of dots;
- the progression of the quantity of transparent fluid specifies and/or comprises a sequence of quantity values for the corresponding sequence of dots; and
- the gradient of the progression of the quantity (302) of ink depends on a difference of the quantity values of two directly successive dots of the sequence of dots.

4. The control device (101) according to any of the preceding claims, wherein the control device (101) is further configured to determine the progression of the quantity of transparent fluid such that
- the gradient of the progression of the total quantity of fluid along the grain direction (201) for the portion of the recording medium (120) is numerically smaller on average, in particular is at least 10% smaller, than the gradient of the progression of the quantity (302) of ink in the sub-portion; and/or
- a maximum value of the gradient of the progression of the total quantity of fluid along the grain direction (201) in the portion of the recording medium (120) is numerically smaller, in particular is smaller by at least 10%, than the maximum value of the gradient of the progression of the quantity (302) of ink in the sub-portion.

5. The control device (101) according to any of the preceding claims, wherein the control device (101) is further configured to effect that the transparent fluid is applied to the recording medium (120) by a print bar (102) of the inkjet printing device (100), said print bar having one or more print heads (103) for printing dots.

6. The control device (101) according to any of the preceding claims, wherein the control device (101) is further configured to:
- identify, based on the progression (302) of ink, an edge between a first dot and a second dot of the print image at which a value of a quantity of ink of the second dot exceeds a value of a quantity of ink of the first dot by at least a predefined difference value; and
- determine the value of the quantity of transparent fluid for the first dot on based on the value of the quantity of ink of the second dot.

7. The control device (101) according to claim 6, wherein the control device (101) is further configured to determine, for a sequence of dots starting from the first dot, a corresponding sequence of values of the quantity of transparent fluid so that the values decrease with increasing distance from the edge, wherein a length (311) of the sequence of dots for which a value greater than zero is determined, and/or a progression (313) of the sequence of values, depend on one or more properties of the recording medium (120), of a fixing unit (150) for fixing the print image, and/or of the ink of the print image.

8. The control device (101) according to any of the preceding claims, wherein the control device (101) is configured to:
- leave a progression of the quantity of ink, said quantity being applied to the portion of the recording medium (120) for printing of the print image by the inkjet printing device (100) transverse to the grain direction (201) of fibers (200) of said recording medium (120), unconsidered in the determination of the quantity of transparent fluid that is applied in the portion of the recording medium (120); and/or
- determine the quantity of transparent fluid that is applied in the portion of the recording medium (120) independently of what progression the quantity of ink, said quantity of ink being applied to the portion of the recording medium (120) for printing of the print image by the inkjet printing device (100), exhibits transverse to the grain direction (201) of fibers (200) of the recording medium (120).

9. The control device (101) according to any of the preceding claims, wherein the control device (101) is further configured to:
- identify, in the portion of the recording medium (120), a printed partial region (300) in which ink is applied to the recording medium (120) to print the print image; wherein
-- the printed partial region (300) has a transverse edge relative to an unprinted first partial region that is arranged directly before or after the printed partial region (300), relative to the grain direction (201); and
-- the printed partial region (300) has a longitudinal edge relative to an unprinted partial region that is arranged directly before or after the printed second partial region (300) along a transverse direction that travels transverse to the grain direction (201);
- effect that transparent fluid is applied in the first partial region in order to reduce the gradient of the progression of the total quantity of fluid along the grain direction (201); and
- to effect that no transparent fluid is applied in the second partial region.

10. The control device (101) according to any of the preceding claims, wherein the control device (101) comprises at least one processor configured to perform one or more functions and/or operations of the control device (101).

11. A method (400) for adapting the total quantity of fluid applied to a portion of a recording medium (120); the method (400) comprising:
- determining (401), for the portion of the recording medium (120), a progression of a quantity (302) of ink that is applied to the portion of the recording medium (120) for printing of a print image by an inkjet printing device (100) along a grain direction (201) of fibers (200) of the recording medium (120);
- determining (402), depending on the progression of the quantity (302) of ink, a progression of a quantity of transparent fluid along the grain direction (201) for the portion of the recording medium (120) so that a progression of a total quantity of fluid along the grain direction (201) results for the portion of the recording medium (120) by superimposing the progression of the quantity (302) of ink and the progression of the quantity of transparent fluid; wherein the progression of the quantity of transparent fluid is determined such that the progression of the total quantity of fluid along the grain direction (201) has a gradient that is numerically smaller, at least in a sub-portion of the portion of the recording medium (120), than the gradient of the progression of the quantity (302) of ink in the sub-portion; and
- effecting (403) that, in addition to the print image, transparent fluid is applied to the portion of the recording medium (120) according to the determined progression of the quantity of transparent fluid.

12. The method (400) according to claim 11, the method (400) further comprising effecting that the transparent fluid is applied to the recording medium (120) by a print bar (102) of the inkjet printing device (100), said print bar having one or more print heads (103) for printing dots.

13. The method (400) according to claim 11 or 12, the method (400) further comprising:
- identifying, based on the progression (302) of ink, an edge between a first dot and a second dot of the print image at which a value of a quantity of ink of the second dot exceeds a value of a quantity of ink of the first dot by at least a predefined difference value; and
- determining the value of the quantity of transparent fluid for the first dot on based on the value of the quantity of ink of the second dot.

14. The method (400) according to any of claims 11-13, the method (400) further comprising:
- leaving a progression of the quantity of ink, said quantity being applied to the portion of the recording medium (120) for printing of the print image by the inkjet printing device (100) transverse to the grain direction (201) of fibers (200) of said recording medium (120), unconsidered in the determination of the quantity of transparent fluid that is applied in the portion of the recording medium (120); and/or
- determining the quantity of transparent fluid that is applied in the portion of the recording medium (120) independently of what progression the quantity of ink, said quantity of ink being applied to the portion of the recording medium (120) for printing of the print image by the inkjet printing device (100), exhibits transverse to the grain direction (201) of fibers (200) of the recording medium (120).

15. The method (400) according to any of claims 11-14, the method (400) further comprising:
- identifying, in the portion of the recording medium (120), a printed partial region (300) in which ink is applied to the recording medium (120) to print the print image; wherein
-- the printed partial region (300) has a transverse edge relative to an unprinted first partial region that is arranged directly before or after the printed partial region (300), relative to the grain direction (201); and
-- the printed partial region (300) has a longitudinal edge relative to an unprinted partial region that is arranged directly before or after the printed second partial region (300) along a transverse direction that travels transverse to the grain direction (201);
- effecting that transparent fluid is applied in the first partial region in order to reduce the gradient of the progression of the total quantity of fluid along the grain direction (201); and
- effecting that no transparent fluid is applied in the second partial region.
